# EUROPÄISCHE PATENTANMELDUNG

(11) **EP 4 656 601 A1**
(43) Veröffentlichungstag der Anmeldung: **03.12.2025**
(21) Anmeldenummer: 25177662.1
(22) Anmeldetag: 20.05.2025
(51) Int. Cl.: C02F 11/125, C02F 11/147, B30B 9/12

(54) **ENTWÄSSERUNGSVORRICHTUNG UND VERFAHREN ZUM ENTWÄSSERN VON SUBSTRAT**

(30) Priorität: 24.05.2024 DE 102024114644
(71) Anmelder: ReTec Research and Development GmbH, 16559 Liebenwald (DE)
(72) Erfinder: Seewald, Gerhard, 16515 Oranienburg (DE); Topka, Hendric, 16559 Liebenwalde (DE)
(74) Vertreter: Grünbaum, Annekathrin

(57) **Zusammenfassung**

Die Erfindung betrifft eine Entwässerungsvorrichtung und ein Verfahren zum Entwässern von Substrat.

Es ist daher Aufgabe der Erfindung die Nachteile des Standes der Technik zu beseitigen und eine Entwässerungsvorrichtung und ein Verfahren zum Entwässern von Substrat bereitzustellen, wobei die Entwässerungsvorrichtung und das Verfahren zum Entwässern von Substrat eine effiziente Entwässerung entlang der gesamten Erstreckung einer Schneckenwelle ermöglicht.

Die Lösung dieser Aufgabe erfolgt durch die in den Ansprüchen aufgeführten Merkmale.

## Beschreibung

Die Erfindung betrifft eine Entwässerungsvorrichtung und ein Verfahren zum Entwässern von Substrat.

Gattungsgemäße Entwässerungsvorrichtungen sind im Stand der Technik beispielsweise aus der Schrift DE 10 2015 121 163 A1 als Schnecken(filter)pressen bekannt, und dienen der Entwässerung von Substrat, beispielsweise Schlamm, wie er beispielsweise auf Kläranlagen anfällt. Der der Schneckenpresse zugeführte Schlamm (Suspension aus einer wässrigen Flüssigkeit und darin enthaltenen Feststoffen) wird mit Hilfe einer Schneckenwelle einem Pressvorgang unterzogen, bei welchem dem Schlamm Flüssigkeit ausgetrieben wird, um den Wassergehalt des Schlamms zu verringern und den entwässerten Schlamm einem weiteren Produktionsschritt zuführen zu können. Während des Pressvorgangs wird der Schlamm von der Schneckenwelle in Richtung einer Austrittsöffnung transportiert und hierbei durch den abnehmenden Abstand benachbarter Schneckenwellenabschnitte komprimiert. Die hierdurch aus dem Schlamm ausgepresste Flüssigkeit gelangt über die die Schneckenwelle umgebenden Filterelemente über einen Auslass in eine Filtratwanne, von der sie beispielsweise einer weiteren Filtration zugeführt wird.

Das Substrat wird einer Schneckenfilterpresse gemäß dem Stand der Technik im Regelfall mittels einer Förderpumpe zugeführt. Wenn das Substrat bei gattungsgemäßen Schneckenfilterpressen in den vorderen Bereich, also dem Bereich mit dem größten Abstand benachbarter Schneckenwellenabschnitte, einläuft, ist der durch ein Mantelrohr umgebene Innenraum der Schneckenfilterpresse in diesem Bereich nicht vollständig gefüllt. Der rein mechanische Filterprozess, bei welchem das Substrat durch einen von innen nach außen gerichteten Druck filtriert wird, läuft in diesem Bereich nicht bzw. nur unvollständig ab, was die Effizienz des Filtrationsprozesses reduziert.

Um den Innenraum der Schneckenfilterpresse vollständig zu füllen, bedarf es demnach einen entsprechend hohen Druck der Förderpumpe.

Dieser wiederum führt dazu, dass ein Teil des Substrats, welches zu diesem Zeitpunkt noch einen hohen Wassergehalt aufweist, in den hinteren Bereich, also dem Bereich mit dem geringsten Abstand benachbarter Schneckenwellenabschnitte, transportiert wird. Hieraus resultiert das Phänomen der umschlungenen Schneckenwelle, welches ebenfalls die Entwässerungseffizienz negativ beeinträchtigt, da das sich dort befindliche und schon weitestgehend entwässerte Substrat wieder verwässert wird.

Es ist demnach wünschenswert über eine Entwässerungsvorrichtung und ein Verfahren zum Entwässern von Substrat zu verfügen, welche eine effiziente Entwässerung entlang der gesamten Erstreckung der Schneckenwelle ermöglichen.

Die Druckschrift DE 20 2009 004 407 U1 bezieht sich auf eine Vorrichtung zum Abtrennen von zumindest Teilen der Flüssigphase aus einem Feststoff- und Flüssigphasen enthaltenden Stoffgemisch, insbesondere einen Förderschneckenseparator, mit zumindest einem Separationsbehälter für die zumindest teilweise voneinander zu trennenden Phasen, welcher wenigstens einen Zulauf für das Stoffgemisch, mindestens einen Ablauf für die abgetrennte Flüssigphase und wenigstens einen Auslass für die Feststoffphase aufweist, und mit zumindest einem Förderer für das vom Zulauf in Richtung des Ablaufes und des Auslasses zu bewegende Stoffgemisch.

Die Druckschrift DE 10 2013 112 878 A1 betrifft eine Vorrichtung (zum Eindicken von flüssigem feststoffhaltigem Substrat, mit wenigstens einem flüssigkeitsdurchlässigen, Feststoff zurückhaltenden Filterrohr und mit einer im Filterrohr rotierbaren Förderschnecke, mit einem in das Filterrohr führenden Substrateinlass, mit einem außen vom Filterrohr ausgehenden Flüssigkeitsauslass und mit einem Feststoffauslass, wobei auf einer inneren Oberfläche des Filterrohrs Feststoff aus dem eingetragenen Substrat abscheidbar ist und wobei mittels der Förderschnecke Feststoff zum Bilden eines Feststoffpfropfens durch den Feststoffauslass austragbar ist.

Ferner offenbart die Druckschrift WO 96/08364 A1 ein Verfahren und eine Vorrichtung zur Erhöhung der Rückgewinnung von Bohrschlamm aus einem Gemisch aus festem Bohrklein und flüssigem Bohrschlamm in einer Rückgewinnungsanlage. Die Anlage umfasst eine Schneckenpresse mit einem Filter, wobei ein reduzierter Druck auf die Außenseite des Filters ausgeübt wird, so dass das Gemisch einem erhöhten Differenzdruck über dem Filter ausgesetzt wird, wodurch überflüssige Mengen an Bohrschlamm aus dem Gemisch herausgedrückt werden. Die Vorrichtung umfasst eine Schneckenpresse mit mindestens einem Eingang und mindestens einer Ausgangsöffnung, wobei die Schneckenpresse mindestens einen schraubenförmigen Zuführschneckengang umfasst, der in einem Filter angeordnet ist.

Die amerikanische Druckschrift US 3 938 434 A offenbart ebenfalls eine Filter-Entwässerungs-Auspressvorrichtung. Rotierende schraubenförmige Schaufeln eines Schneckenförderers komprimieren und quetschen Flüssigkeit aus dem Schlamm innerhalb einer Struktur, die es der Flüssigkeit erlaubt, daraus zu entweichen, und entladen die entwässerten Feststoffe aus dem Ende. Das Filter- und Entwässerungsmedium, das durch einen Rahmen starr gehalten wird, besteht aus einer Reihe von Ringen, die voneinander getrennt und eng beieinander liegen, oder aus einem kontinuierlichen Draht mit halbkreisförmigem Querschnitt, der eng zu einer Spule gewickelt ist, oder aus einem perforierten Sieb. Ein unperforiertes Filtratsammelgehäuse umgibt dieses Medium, und eine Vakuumpumpe ist an das Filtratgehäuse angeschlossen.

### Darstellung der Erfindung

Es ist Aufgabe der Erfindung die Nachteile des Standes der Technik zu beseitigen und eine Entwässerungsvorrichtung und ein Verfahren zum Entwässern von Substrat bereitzustellen, wobei die Entwässerungsvorrichtung und das Verfahren zum Entwässern von Substrat eine effiziente Entwässerung entlang der gesamten Erstreckung einer Schneckenwelle ermöglicht.

Die Lösung dieser Aufgabe erfolgt durch die in den Ansprüchen aufgeführten Merkmale.

Die Lösung der Aufgabe erfolgt durch eine Entwässerungsvorrichtung zum Entwässern von Substrat, wobei die Entwässerungsvorrichtung zumindest einen Einlass für das zu entwässernde Substrat, zumindest eine Pressanordnung, zumindest einen ersten Auslass für die mittels der Pressanordnung ausgetriebenen Flüssigkeit, zumindest einen zweiten Auslass für das mittels der zumindest einen Pressanordnung zumindest teilweise entwässerte Substrat und zumindest eine Vakuumpumpe aufweist. Mittels der zumindest einen Pressanordnung ist das Substrat nach Passieren des zumindest einen Einlasses einem Pressvorgang unterziehbar. Bei dem Pressvorgang wird in dem Substrat vorhandene Flüssigkeit zumindest teilweise aus dem Substrat ausgetrieben. Die zumindest eine Vakuumpumpe ist fluidisch mit der zumindest einen Pressanordnung verbunden. Die zumindest eine Pressanordnung weist eine mit Hilfe eines Antriebs in eine Drehbewegung versetzbare Schneckenwelle und zumindest ein die Schneckenwelle zumindest abschnittsweise umgebendes Filterelement auf. Ferner weist die Pressanordnung auch ein die Schneckenwelle zumindest teilweise umgebenden Presskörper auf, wobei der Presskörper vor dem zweiten Auslass angeordnet ist und wobei der Presskörper eine im Querschnitt innenseitig zahnradartige Struktur aufweist.

Die zumindest eine Pressanordnung wird über den zumindest einen Einlass mit Substrat befüllt. Das Substrat kann dem zumindest einen Einlass beispielsweise durch eine flexible Schlauchleitung oder aber eine solide Rohrleitung zugeführt werden. Das Zuführen erfolgt durch einen Pump- und/oder Saugvorgang. Während eines Pumpvorgangs kann das Substrat mittels einer geeigneten Pumpe, beispielsweise einer Schlauchpumpe oder einer Membranpumpe, dem zumindest einen Einlass zugeführt. Eine Saugvorgang kann mittels eines sich in der zumindest einen Pressanordnung bildenden Vakuums realisiert werden. Hierfür erzeugt die zumindest eine Vakuumpumpe, welche fluidische mit der zumindest einen Pressanordnung verbunden ist, ein Vakuum/Unterdruck. Ein sich an dem dem zumindest einen Einlass gegenüberliegenden Ende der Leitung befindliches Substrat wird somit in die zumindest eine Pressanordnung eingesogen. Es versteht sich, dass für beide Vorgänge entsprechende Druck- und/oder Vakuum-resistente Leitungen und Behälter Anwendung finden müssen.

Mit der zumindest einen Pressanordnung ist das Substrat nach Passieren des zumindest einen Einlasses einem Pressvorgang unterziehbar, bei dem in dem Substrat vorhandene Flüssigkeit zumindest teilweise aus dem Substrat ausgetrieben wird. Hierfür weist die zumindest eine Pressanordnung eine Schneckenwelle auf, welche mit Hilfe eines Antriebes in eine Drehbewegung versetzbar ist. Die Schneckenwelle besitzt in der Regel eine innenliegende Achse, um die sich ein Schneckenwendelkern erstreckt, um den sich wiederum, vergleichbar zu einer archimedischen Schraube, zumindest eine Schneckenwendel erstreckt. Der Antrieb kann in einfacher Ausführung eine Handkurbel sein. Der Antrieb kann aber auch ein steuer- und/oder regelbarer Elektromotor oder jede andere Vorrichtung sein, welche dafür eingerichtet ist, die Schneckenwelle um ihre innenliegende Achse zu drehen.

Um die Schneckenwelle ist zumindest abschnittsweise zumindest ein Filterelement angeordnet, so dass das zu entwässernde Substrat beim Transport durch die sich drehende Schneckenwelle seitlich gegen das zumindest eine Filterelement gepresst und hierbei zumindest teilweise entwässert wird, da die Flüssigkeit durch Öffnungen des Filterelements treten kann, während ein Großteil der Feststoffe zurückgehalten wird.

Die ausgetriebene Flüssigkeit verlässt die Entwässerungsvorrichtung mittels des zumindest einen ersten Auslasses. Hierbei kann die Flüssigkeit der Gravitation folgen, mittels einer Pumpe angesogen, mittels Druckluft ausgestoßen oder anderweitig die Entwässerungsvorrichtung verlassen.

Das mittels der zumindest einen Pressanordnung zumindest teilweise entwässerte Substrat verlässt die Entwässerungsvorrichtung mittels des zumindest einen zweiten Auslasses. Dies geschieht, indem das zumindest teilweise entwässerte Substrat durch die zumindest eine Pressanordnung zu dem zumindest einen zweiten Auslass gefördert, und aus diesem herausgepresst wird.

Gemäß verschiedener Ausführungsformen ist das zumindest eine die Schneckenwelle zumindest abschnittsweise umgebende Filterelement aus einem Gewebe gebildet.

Ein Gewebe lässt sich in Bezug auf wesentliche Filtrationseigenschaften, im Speziellen Porengröße/Maschenweite und Dicke, leicht an unterschiedliche Applikationen anpassen. Das zumindest eine Filterelement kann aber beispielsweise auch als Gewirk und/oder Geflecht und/oder Gelege und/oder Vlies und/oder Filz gebildet sein. Hierbei kann das zumindest eine Filterelement textiler Natur sein, aber beispielsweise auch aus Metalldrähten gebildet sein, wobei die Verwendung rostfreier Materialien vorteilhaft ist. Das zumindest eine Filterelement weist bevorzugt eine Porengröße/Maschenweite von 20 µm bis 200 µm auf. Die Porengröße/Maschenweite kann aber auch größer oder kleiner ausfallen und ist, wie alle anderen Eigenschaften des zumindest einen Filterelements auch, abhängig von der Applikation der Entwässerungsvorrichtung. So versteht sich, dass technische und/oder verfahrenstechnische Aspekte zwischen einer Klärschlammaufbereitung und einer pharmazeutischen Applikation variieren werden.

Gemäß verschiedener Ausführungsformen ist das zumindest eine die Schneckenwelle zumindest abschnittsweise umgebende Filterelement austauschbar.

Eine Filtrationswirkung kann, auf Grund eines Verblockens des zumindest einen Filterelements, nicht mehr ausreichend gegeben sein oder sich komplett eingestellt haben. Zum Rückspülen einer Verblockung, beispielsweise mittels Klarwasser oder Filtrat, kann die Entwässerungsvorrichtung einen Rückspülstutzen aufweisen, welcher mit einem Wasserzulauf verbindbar ist. Sollte auch ein Rückspülen die Verblockung nicht lösen können, ist die Entwässerungsvorrichtung vorteilhafterweise mittels weniger Handgriffe, idealerweise werkzeuglos, öffenbar. Herfür können diverse Schraub- und oder Klemmmittel, beispielsweise zwischen dem zumindest einen Einlass und der zumindest einen Pressanordnung, vorgesehen sein. Sodann ist das zumindest eine Filterelement vorteilhafterweise frei zugänglich und mittels einfachen Herausziehens und Einsteckens austauschbar. Das zumindest eine Filterelement kann somit ausgetauscht werden, ohne dass es hierfür Fachpersonal oder speziellem Werkzeug bedarf. Sodann kann das zumindest eine Filterelement gereinigt und/oder regeneriert und/oder gegen ein neues Filterelement ausgetauscht werden.

Gemäß verschiedener Ausführungsformen nimmt ein Durchmesser eines Schneckenwellenkerns der Schneckenwelle entlang einer Förderrichtung der Schneckenwelle zu.

Mit zunehmendem Durchmesser des Schneckenwellenkerns der Schneckenwelle erhöhen sich die Radialkräfte, welche auf das zu entwässernde Substrat wirken. Gleichzeitig verringert sich eine Schichtdicke des zu entwässernden Substrats zwischen dem Schneckenwellenkern und dem zumindest einen Filterelement. In Summe führt dies dazu, dass mehr Flüssigkeit aus dem zu entwässernden Substrat in Richtung des zumindest einen Filterelements ausgetragen wird, wo die Flüssigkeit durch das angelegte Vakuum abgesogen wird. Vorteilhafterweise weist der Schneckenwellenkern hierfür einen konischen Verlauf auf, wobei der geringste Durchmesser im Bereich des zumindest einen ersten Einlasses angeordnet ist, und wobei der größte Durchmesser im Bereich des zumindest einen zweiten Auslasses angeordnet ist.

Gemäß verschiedener Ausführungsformen nimmt eine Steigung einer Schneckenwendel der Schneckenwelle entlang der Förderrichtung der Schneckenwelle ab.

Mit abnehmender Steigung der Schneckenwendel entlang der Förderrichtung erhöht sich der Pressdruck, welcher auf das zwischen der Schneckenwendel angeordnete zu entwässernde Substrat wirkt. Mit anderen Worten ausgedrückt, wird das zu entwässernde Substrat entlang der Förderrichtung der Schneckenwelle immer weiter komprimiert. Gleichzeitig erhöht sich, bei gleicher Drehzahl der Schneckenwelle, die Verweilzeit des zu entwässernden Substrats in der Entwässerungsvorrichtung. In Summe führt dies dazu, dass mehr Flüssigkeit aus dem zu entwässernden Substrat in Richtung des zumindest einen Filterelements ausgetragen wird, wo die Flüssigkeit durch das angelegte Vakuum abgesogen wird. Die Schneckenwelle kann eine oder mehrere Schneckenwendeln aufweisen.

Gemäß verschiedener Ausführungsformen weist die zumindest eine Pressanordnung ferner zumindest ein Stützelement auf. Das zumindest eine Stützelement nimmt die zumindest eine Schneckenwelle und das die zumindest eine Schneckenwelle zumindest abschnittsweise umgebende Filterelement auf.

Um die Schneckenwelle ist zumindest abschnittsweise zumindest ein Filterelement angeordnet, so dass das Substrat beim Transport durch die sich drehende Schneckenwelle seitlich gegen das zumindest eine Filterelement gepresst und hierbei zumindest teilweise entwässert wird, da die Flüssigkeit durch Öffnungen des zumindest einen Filterelements treten kann, während ein Großteil der Feststoffe zurückgehalten wird. Um dem hierbei auftretenden Druck zu widerstehen, weist die zumindest eine Pressanordnung neben dem zumindest einen Filterelement zumindest ein die Stabilität des zumindest einen Filterelements sicherstellende Stützelement auf. Das zumindest eine Stützelement kann ein perforiertes Stützrohr sein, welches die Radialkräfte des zu entwässernden Substrats aufnimmt und eine physische Integrität des zumindest einen Filterelementes gewährleistet. Das zumindest eine Stützelement kann beispielsweise aus Kunststoff gefertigt sein. Das zumindest eine Stützelement kann auch aus Metall, beispielsweise in Form eines zylindrisch ausgeformten Lochblechs, gefertigt sein. Tendenziell sind alle derartig formbaren Materialien denkbar, wobei diese vorzugsweise rostfrei sind.

Neben dem zumindest einen Stützelement kann auch das zumindest eine Filterelement stützende Strukturen aufweisen. Beispielsweise kann das zumindest eine Filterelement, welches ein gewebter, textiler Filterstrumpf sein kann, an seiner Außenseite, also der dem zumindest einen Stützelement zugewandten Seite, ein Stützgewebe aufweisen. Das Stützgewebe kann textilbasiert, aber auch aus anderen Materialien gefertigt sein. Beispielsweise kann das Stützgewebe aus Metalldraht gefertigt sein, wobei dieser vorzugsweise rostfrei ist.

Gemäß verschiedener Ausführungsformen weist die zumindest eine Pressanordnung ferner zumindest eine Retentionseinrichtung auf. Die zumindest eine Retentionseinrichtung ist dafür eingerichtet, den zumindest einen zweiten Auslass wahlweise zu verschließen oder freizugeben.

Gemäß verschiedener Ausführungsformen ist die zumindest eine Retentionseinrichtung eine Druckplatte. Die Druckplatte verschließt den zumindest einen zweiten Auslass mittels eines einstellbaren Gegendrucks.

Gemäß verschiedener Ausführungsformen ist der Gegendruck der Druckplatte mittels zumindest einer Druckfeder einstellbar.

Die zumindest eine Retentionseinrichtung erfüllt zumindest zwei Aufgaben. Zu Beginn des Entwässerungsvorgang ermöglicht die zumindest eine Retentionseinrichtung ein luftdichtes Verschließen der zumindest einen Pressanordnung, indem sie den zumindest einen zweiten Auslass luftdicht verschließt, wobei Dichtelemente, beispielsweise Dichtgummis, vorgesehen sein können. Nur ein luftdichtes Verschließen der zumindest einen Pressanordnung ermöglicht es hierin ein Vakuum für die Entwässerung aufzubauen. Während des fortgeschritten Entwässerungsvorgangs kann die zumindest eine Retentionseinrichtung den zumindest einen zweiten Auslass freigeben, sodass das zumindest teilweise entwässerte Substrat durch die Schneckenwelle aus der zumindest einen Pressanordnung gepresst werden kann. Die Freigabe des zumindest einen zweiten Auslasses erfolgt vorteilhafter Weise als Resultat des Überwindens eines Gegendrucks durch das zumindest teilweise entwässerte Substrat. Zum Einstellen eines entsprechenden Gegendrucks kann die zumindest eine Retentionseinrichtung, welche als Druckplatte ausgeführt sein kann, mittels zumindest einer einstellbaren Druckfeder gegen die zumindest eine Pressanordnung gepresst sein. Über den Gegendruck kann die Verweilzeit des zu entwässernden Substrats in der Entwässerungsvorrichtung eingestellt werden, wobei ein geringerer Gegendruck in einer geringeren Verweilzeit resultiert.

Gemäß verschiedener Ausführungsformen weist die Entwässerungsvorrichtung ferner zumindest einen Substratvorlagebehälter und/oder zumindest einen Flockungsmittelvorlagebehälter auf. Der zumindest eine Substratvorlagebehälter und/oder der zumindest eine Flockungsmittelvorlagebehälter ist/sind über zumindest jeweils eine Zuleitung oder zumindest eine gemeinsame Zuleitung fluidisch mit dem zumindest einen Einlass verbunden.

Gemäß verschiedener Ausführungsformen weist die zumindest eine gemeinsame Zuleitung zumindest ein Dosierventil für eine dosierte Zugabe zumindest eines Flockungsmittels auf.

Die Entwässerungsvorrichtung kann zumindest einen Substratvorlagebehälter aufweisen, sofern ein solcher nicht bereits am Einsatzort vorgesehen ist. Aus dem zumindest einen Substratvorlagebehälter kann das zu entwässernde Substrat zum zumindest einen Einlass gepumpt werden, oder im Falle eines angelegten Vakuums durch den zumindest einen Einlass in die zumindest eine Pressanordnung eingesogen werden.

Die Entwässerungsvorrichtung kann ferner einen zumindest einen Flockungsmittelvorlagebehälter aufweisen, in dem zumindest ein Flockungsmittel bevorratbar ist. Flockungsmittel dienen der Zusammenlagerung kleinster, kolloider oder gelöster Partikel in Flüssigkeiten. Flockungsmittel bilden aus den Kolloiden größere Flocken, die sich gut durch Filtration entfernen lassen. Durch die Flockung wird ein frühzeitiges Blockieren des zumindest einen Filterelements verhindert, indem die Flocken vorzugsweise derartig groß sind, dass sie sich nicht innerhalb der Poren/Maschen des zumindest einen Filterelements festsetzen können, und kontinuierlich durch die Schneckenwelle ausgetragen werden können. Vorzugsweise ist das verwendete Flockungsmittel ein organisches Flockungsmittel.

Vorzugsweise weisen der zumindest eine Substratvorlagebehälter und der zumindest eine Flockungsmittelvorlagebehälter zumindest eine gemeinsame Zuleitung auf, welche fluidisch mit dem zumindest einen Einlass verbunden ist. Vorteilhaft hierbei ist, dass das Flockungsmittel dem zu entwässernden Substrats während des Pump- oder Saugvorgangs in die zumindest eine Pressanordnung zudosiert werden kann. Sodann erfolgt eine Flockung in der zumindest einen gemeinsamen Zuleitung. Das zu entwässernde Substrat erreicht die zumindest eine Pressanordnung in einem bereits geflockten Zustand, sodass eine effiziente Filtration gewährleistet ist. Ferner vorteilhaft hierbei ist, dass die Zugabe des Flockungsmittels geregelt werden kann. So kann beispielsweise eine Dosierung des Flockungsmittels in Abhängigkeit eines Durchsatzes des zu entwässernden Substrats, welcher primär durch eine Drehzahl der Schneckenwelle bestimmt ist, erfolgen. Hierfür kann ein Auslass des zumindest einen Flockungsmittelvorlagebehälter ein Dosierventil, beispielsweise ein Nadelventil, aufweisen.

Sofern keine zumindest eine gemeinsame Zuleitung vorgesehen ist, kann das Flockungsmittel alternativ direkt dem Substratvorlagebehälter zugeführt werden.

Gemäß verschiedener Ausführungsformen weist die Entwässerungsvorrichtung ferner zumindest einen Filtratbehälter auf. Der zumindest eine Filtratbehälter ist fluidisch mit der zumindest einen Pressanordnung verbunden.

Der zumindest eine Filtratbehälter dient einer kontinuierlichen Aufnahme der aus dem zu entwässerndem Substrat ausgetriebenen Flüssigkeit, um diese ggf. nachgelagerten Prozessen zuzuführen. Hierbei kann der zumindest eine Filtratbehälter Vakuum-resistent ausgebildet, und zum einen fluidisch mit der zumindest einen Pressanordnung, und zum anderen fluidisch mit der zumindest einen Vakuumpumpe verbunden sein. Der Betrieb der zumindest einen Vakuumpumpe resultiert dann in einem Unterdruck/Vakuum, sowohl in dem Filtratbehälter, als auch in der zumindest einen Pressanordnung. Eine derartig vorteilhafte Anordnung der Komponenten ermöglicht es, das zu entwässernde Substrat mittels eines Unterdrucks/Vakuums kontinuierlich in die zumindest eine Pumpanordnung einzusaugen, während Filtrat kontinuierlich in dem zumindest einen Filtratbehälter aufgenommen werden kann.

Gemäß verschiedener Ausführungsformen weist die Entwässerungsvorrichtung ferner eine Haltervorrichtung auf. Die Haltevorrichtung ist dafür ausgebildet, die Entwässerungsvorrichtung in einem einstellbaren Neigungswinkel zu haltern.

Eine geneigte Halterung der Entwässerungsvorrichtung ist insofern vorteilhaft, als dass die zu entwässernde Flüssigkeit, der Gravitation folgend, geneigt ist sich zu einem unteren Bereich der Entwässerungsvorrichtung zu bewegen. Ist dieser untere Bereich nunmehr durch einen Entwässerungsbereich der Entwässerungsvorrichtung gebildet, also jenem Bereich nahe an dem zumindest einen Einlass, so verlängert sich hierdurch die Verweilzeit der in dem Substrat vorhandenen Flüssigkeit in der zumindest einen Pressanordnung. Hierdurch kann mehr Flüssigkeit ausgetrieben werden, und die Prozesseffizienz steigt. Es ist denkbar, dass der Neigungswinkel manuell, beispielsweise durch geeignete Rastelemente, einstellbar ist. Der Neigungswinkel kann aber auch automatisch, beispielsweise mittels eines Stellmotors, einstellbar sein. Es ist denkbar, dass der Neigungswinkel zu Beginn eines Filtrationsvorgangs anders ist als am Ende des Filtrationsvorgangs, wobei sich der Neigungswinkel dazwischen seriell oder kontinuierlich ändern kann.

Gemäß verschiedener Ausführungsformen weist die Entwässerungsvorrichtung ferner eine Steuerungs- und/oder Regelungseinheit auf. Die Steuerungs- und/oder Regelungseinheit ist dazu ausgebildet, Komponenten der Entwässerungsvorrichtung zu steuern und/oder zu regeln.

Die Steuerung und/oder Regelung der Entwässerungsvorrichtung kann eine Vielzahl von Parametern umfassen, wobei an dieser Stelle lediglich die wichtigsten benannt sind. Der Fachmann liest mit, dass für etwaige Steuerungen und/oder Regelungen spezifische Sensorik zur Verfügung stehen muss, welche an die gegebenen Prozessbedingungen angepasst sein muss.

Die Steuerungs- und/oder Regelungseinheit kann u.a. einen Druckbereich des mittels der Vakuumpumpe erzeugten Vakuums steuern und/oder regeln. Hierbei ist jeder Druckbereich zwischen Normaldruck (101,325 kPa) und einem extrem hohen Vakuum (< 1 nPa) denkbar. Ferner kann die Steuerungs- und/oder Regelungseinheit eine Geschwindigkeit zur Herstellung eines Vakuums steuern und/oder regeln. In einer Anfangsphase der Filtration, indem das Substrat mittels des Vakuums in die Pressanordnung gesaugt werden kann, bestimmt der Druckbereich des Vakuums eine Zulaufgeschwindigkeit des Substrats. In einer der Anfangsphase der Filtration nachgelagerten Phase, indem die Pressanordnung vollständig gefüllt ist, bestimmt u.a. der Druckbereich des Vakuums einen finalen Trockensubstanzanteil des entwässerten Substrats. Hierbei bedeutet ein höheres Vakuum (geringerer Druck) in der Regel einen erhöhten Trockensubstanzanteil.

Die Steuerungs- und/oder Regelungseinheit kann ferner eine Drehgeschwindigkeit der Schneckenwelle steuern und/oder regeln. Hierbei bestimmt die Drehgeschwindigkeit der Schneckenwelle die Verweilzeit des Substrats in der zumindest einen Pressanordnung. Hierbei bedeutet eine längere Verweilzeit, bei gleichbleibendem Druck des Vakuums, in der Regel einen erhöhten Trockensubstanzanteil. Die Drehgeschwindigkeit der Schneckenwelle bestimmt dementsprechend auch die Durchsatzmenge des Substrats bzw. die Austragsmenge des entwässerten Substrats, wobei eine höhere Drehgeschwindigkeit mit einer höheren Durchsatzmenge und Austragsmenge einhergeht, aber auch einen geringen Trockensubstanzanteil mit sich bringen kann.

Die Steuerungs- und/oder Regelungseinheit kann ferner eine Temperatur innerhalb der Pressanordnung steuern und/oder regeln. Hierfür kann/können beispielsweise die Entwässerungsvorrichtung und/oder der Substratvorlagebehälter und/oder der Filtratbehälter beispielsweise eine Temperiermanschette oder vergleichbare Vorrichtungen aufweisen. Beispielsweise kann so die Temperatur des Substrats erhöht oder verringert werden, um seine Viskosität und eine damit verbundene Fließfähigkeit gezielt zu beeinflussen. So kann beispielsweise die Temperatur eines sehr viskosen Substrats erhöht werden, um dieses fließfähiger zu machen. Ferner kann eine entsprechende Temperierung die Aktivität des Flockungsmittels positiv beeinflussen, um die Effizienz der Filtration zu steigern. Eine Kühlung des Filtrats kann von Vorteil sein, um eine biologische Restaktivität zu unterdrücken, zumindest aber zu verlangsamen, wenn diese für eine nachgelagerte Verwendung des Filtrats nicht wünschenswert ist.

Die Steuerungs- und/oder Regelungseinheit kann ferner eine Dosierung eines Flockungsmittels steuern und/oder regeln, wie bereits oben beschrieben wurde.

Der Stand der Technik kennt unzählige weitere Möglichkeiten zur Steuerung und/oder Regelung eines Filtrationsprozesses, welche in ihrer Gesamtheit Anwendung finden können.

Die Lösung der Aufgabe erfolgt ferner durch ein Verfahren zum Entwässern von Substrat mittels einer Entwässerungsvorrichtung, aufweisend folgende Verfahrensschritte:
a. Befüllen einer Pressanordnung mit einem zu entwässernden Substrat,
b. Erzeugen eines Vakuums/Unterdrucks in der Pressanordnung mittels einer Vakuumpumpe,
c. Austreiben einer in dem Substrat vorhandenen Flüssigkeit mittels des erzeugten Unterdrucks/Vakuums und der Pressanordnung, wobei die Pressanordnung mittels einer Schneckenwelle, welche angetrieben wird, das Substrat entwässert und einen auf einem Filterelement akkumulierendes entwässertes Substrat vorwärts bis zu einem Substratauslass der Entwässerungsvorrichtung befördert.

Gemäß verschiedener Ausführungsformen erfolgt Verfahrensschritt a. durch Verfahrensschritt b., indem das zu entwässernde Substrat mittels des erzeugten Vakuums/Unterdrucks in die Pressanordnung (2) gesaugt wird.

Verfahrensschritt a. kann mittels einer Pumpvorrichtung erfolgen. Verfahrensschritt a. kann aber auch mittels Verfahrensschritt b. erfolgen, sofern ein Einlass der Pressordnung mit einer entsprechenden Saugleitung fluidisch mit dem zu entwässernden Substrat verbunden ist.

Gemäß verschiedener Ausführungsformen wird dem zu entwässerndem Substrat vor oder während des Befüllens der Pressanordnung (2) ein Flockungsmittel beigesetzt.

Gemäß verschiedener Ausführungsformen erfolgt das Austreiben der Flüssigkeit in Schritt c) mittels einem sich verjüngenden Schneckendurchmesser der Schneckenwelle.

Die erfindungsgemäße Vorrichtung und das erfindungsgemäße Verfahren ermöglichen eine effiziente Entwässerung entlang der gesamten Erstreckung einer Schneckenwelle ermöglicht.

Durch die Kombination einer Filtration durch Verpressen und einer Vakuumfiltration kann in dem entwässerten Substrat ein Trockensubstanzanteil von ca. 30 % erzielt werden, während ein alleiniges Verpressen desselben Substrats lediglich in einem Trockensubstanzanteil von ca. 7 % resultiert.

Jenseits eines hohen Trockensubstanzanteils ermöglicht die Kombination einen schnellstmöglichen Austrag des Filtrats (bzw. Zentrats), wobei das Verfahren kontinuierlichen betrieben werden kann.

Sowohl der Vakuumdruck, als auch die Schneckendrehzahl können entsprechend den verschiedenen Materialien, zum einen den Materialien der Entwässerungsvorrichtung, zum anderen den Bestandteilen und der Beschaffenheit des Substrats, eingestellt werden. Hierbei steht eine große Auswahl an Filtermaterialien zu Verfügung.

Die Vorrichtung und das Verfahren zeichnen sich durch einen geräuscharmen Betrieb bei niedrigem Energieverbrauch aus.

### Ausführung der Erfindung

Die Erfindung wird anhand eines Ausführungsbeispiels näher erläutert. Hierzu zeigt
- Figur 1: Entwässerungsvorrichtung in seitlicher Schnittansicht,
- Figur 2: Presskörper in frontaler Ansicht.

In der Beschreibung wird auf die beigefügten Zeichnungen Bezug genommen, in denen zur Veranschaulichung spezifische Ausführungsformen gezeigt sind, in denen die erfindungsgemäße Anordnung ausgeübt werden kann. In dieser Hinsicht wird eine Richtungsterminologie wie etwa "oben", "unten" usw. mit Bezug auf die Orientierung der beschriebenen Zeichnungen verwendet. Die Richtungsterminologie dient der Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

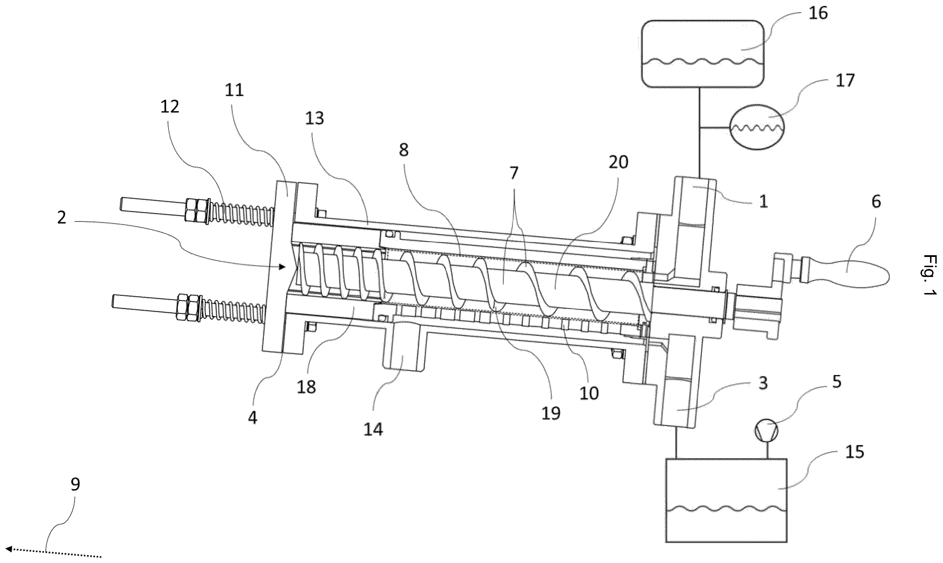

Der erfindungsgemäße Entwässerungsvorrichtung zum Entwässern von Substrat ist in Figur 1 dargestellt. Die Entwässerungsvorrichtung zum Entwässern von Substrat weist zumindest einen Einlass 1 für das zu entwässernde Substrat, zumindest eine Pressanordnung 2, zumindest einen ersten Auslass 3 für die mittels der Pressanordnung 2 ausgetriebenen Flüssigkeit, zumindest einen zweiten Auslass 4 für das mittels der zumindest einen Pressanordnung 2 zumindest teilweise entwässerte Substrat und zumindest eine Vakuumpumpe 5 auf. Mittels der zumindest einen Pressanordnung 2 ist das Substrat nach Passieren des zumindest einen Einlasses 1 einem Pressvorgang unterziehbar. Bei dem Pressvorgang wird in dem Substrat vorhandene Flüssigkeit zumindest teilweise aus dem Substrat ausgetrieben. Die zumindest eine Vakuumpumpe 5 ist fluidisch mit der zumindest einen Pressanordnung 2 verbunden. Die zumindest eine Pressanordnung 2 weist eine mit Hilfe eines Antriebs 6 in eine Drehbewegung versetzbare Schneckenwelle 7 und zumindest ein die Schneckenwelle 7 zumindest abschnittsweise umgebendes Filterelement 8 auf.

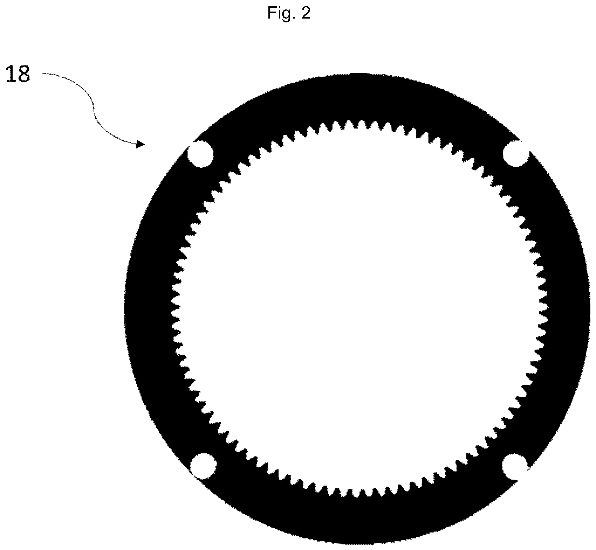

Gemäß Figur 1 ist der Antrieb eine Handkurbel, wobei der Antrieb aber auch ein Motor sein kann. Die Pressanordnung 2 ist ein einem Mantelrohr 13 angeordnet. Das Mantelrohr 13 weist an seiner Unterseite im Entwässerungsbereich, also jenem Bereich, in dem das Filterelement 8 angeordnet ist, einen Rückspülstutzen 14 auf. Die Pressanordnung 2 weist in ihrem vorderen Bereich, also jenem Bereich, an welchem der zweite Auslass 4 angeordnet ist, ein Presskörper 18 ersichtlich in Figur 2 auf. Das die Schneckenwelle 7 zumindest abschnittsweise umgebende Filterelement 8 kann aus einem Gewebe gebildet und/oder austauschbar sein. Ein Durchmesser eines Schneckenwellenkerns 20 der Schneckenwelle 7 kann entlang einer Förderrichtung 9 der Schneckenwelle 7 zunehmen, wobei Figur 1 lediglich einen zylindrischen, nicht aber einen konischen Schneckenwellenkern 20 zeigt. Gemäß der Ausführungsform entsprechend Figur 1 kann eine Steigung einer Schneckenwendel 19 der Schneckenwelle 7 entlang der Förderrichtung 9 der Schneckenwelle 7 abnehmen. Die Pressanordnung 2 kann, wie in Figur 1 dargestellt, ferner zumindest ein Stützelement 10 aufweisen. Das Stützelement 10 nimmt die Schneckenwelle 7 und das die Schneckenwelle 7 zumindest abschnittsweise umgebende Filterelement 8 auf und ist aus einem Rohr mit einer Vielzahl von Durchgangsöffnungen gebildet. Die Pressanordnung 2 weist eine Retentionseinrichtung 11 auf. Die Retentionseinrichtung 11 ist dafür eingerichtet, den zweiten Auslass 4 wahlweise zu verschließen oder freizugeben. Entsprechend der Ausführungsform gemäß Figur 1 ist die Retentionseinrichtung 11 eine Druckplatte. Die Druckplatte verschließt den zweiten Auslass 4 mittels eines einstellbaren Gegendrucks, wobei der Gegendruck mittels mehrerer Druckfedern 12 einstellbar ist. Die Entwässerungsvorrichtung gemäß Figur 1 weist ferner einen Substratvorlagebehälter 16 und einen Flockungsmittelvorlagebehälter 17 auf. Der Substratvorlagebehälter 16 und der Flockungsmittelvorlagebehälter 17 sind über eine gemeinsame Zuleitung fluidisch mit dem einen Einlass 1 verbunden. Die gemeinsame Zuleitung kann zumindest ein Dosierventil für eine dosierte Zugabe zumindest eines Flockungsmittels aufweisen nicht dargestellt. Die Entwässerungsvorrichtung gemäß Figur 1 weist ferner einen Filtratbehälter 15 auf. Der Filtratbehälter 15 ist fluidisch mit der Pressanordnung 2 verbunden. Gleichzeitig ist der Filtratbehälter 15 mit der Vakuumpumpe 5 verbunden. Geht die Vakuumpumpe 5 in Betrieb, erzeugt sie ein Unterdruck/Vakuum im Filtratbehälter 15 und in der Pressanordnung 2, was in einem Einsaugen des zu entwässernden Substrats aus dem Substratvorlagebehälter 16 über den einen Einlasses 1 in die Pressanordnung 2 bewirkt. Gemäß verschiedener Ausführungsformen weist die Entwässerungsvorrichtung ferner eine Haltervorrichtung nicht dargestellt auf. Die Haltevorrichtung ist dafür ausgebildet, die Entwässerungsvorrichtung in einem einstellbaren Neigungswinkel zu haltern. Die Entwässerungsvorrichtung kann ferner eine Steuerungs- und/oder Regelungseinheit aufweisen nicht dargestellt. Die Steuerungs- und/oder Regelungseinheit ist dazu ausgebildet, Komponenten der Entwässerungsvorrichtung zu steuern und/oder zu regeln.

Figur 2 zeigt den Presskörper 18 der Pressanordnung 2 in frontaler Ansicht. Der Presskörper 18 ist ein im Wesentlichen zylindrisch ausgeformter Körper. Ein Innenradius des Presskörpers 18 ist minimal größer als ein Außenradius der Schneckenwelle 7, welche durch die Schneckenwendel 19 und den Schneckenwellenkern 20 gebildet ist. Die zahnradartige Struktur der Innenseite des Presskörper 18 gewährleistet einen kontinuierlichen Abtrag des entwässerten Substrats von der Schneckenwendel 7, sodass dieser nicht einfach der Rotationsbewegung der Schneckenwendel 7 folgt. Sodann bewegt sich das abgetragene entwässerte Substrat auf Grund des kontinuierlichen Pressvorgangs entlang der durch die Enkerbungen des Presskörpers 18 gebildeten Kanäle zu dem zweiten Auslass 4.

### Bezugszeichen

- **1**: Einlass
- **2**: Pressanordnung
- **3**: erster Auslass
- **4**: zweiter Auslass
- **5**: Vakuumpumpe
- **6**: Antrieb
- **7**: Schneckenwelle
- **8**: Filterelement
- **9**: Förderrichtung der Schneckenwelle
- **10**: Stützelement
- **11**: Retentionseinrichtung
- **12**: Druckfeder
- **13**: Mantelrohr
- **14**: Rückspülstutzen
- **15**: Filtratbehälter
- **16**: Substratvorlagebehälter
- **17**: Flockungsmittelvorlagebehälter
- **18**: Presskörper
- **19**: Schneckenwendel
- **20**: Schneckenwellenkern

## Patentansprüche

1. Entwässerungsvorrichtung zum Entwässern von Substrat, aufweisend
zumindest einen Einlass (1) für das zu entwässernde Substrat,
zumindest eine Pressanordnung (2), wobei mittels der zumindest einen Pressanordnung (2) das Substrat nach Passieren des zumindest einen Einlasses (1) einem Pressvorgang unterziehbar ist, bei dem in dem Substrat vorhandene Flüssigkeit zumindest teilweise aus dem Substrat ausgetrieben wird,
zumindest einen ersten Auslass (3) für die mittels der zumindest einen Pressanordnung (2) ausgetriebenen Flüssigkeit,
zumindest einen zweiten Auslass (4) für das mittels der Pressanordnung (2) zumindest teilweise entwässerte Substrat,
zumindest eine Vakuumpumpe (5), wobei die zumindest eine Vakuumpumpe (5) fluidisch mit der zumindest einen Pressanordnung (2) verbunden ist, und wobei
die zumindest eine Pressanordnung (2) eine mit Hilfe eines Antriebs (6) in eine Drehbewegung versetzbare Schneckenwelle (7), zumindest ein die Schneckenwelle (7) zumindest abschnittsweise umgebendes Filterelement (8) und ein die Schneckenwelle (7) zumindest teilweise umgebenden Presskörper (18) aufweist, wobei der Presskörper (18) vor dem zweiten Auslass (4) angeordnet ist und wobei der Presskörper (18) eine im Querschnitt innenseitig zahnradartige Struktur aufweist.

2. Entwässerungsvorrichtung gemäß Anspruch 1, **dadurch gekennzeichnet, dass** das zumindest eine die Schneckenwelle (7) zumindest abschnittsweise umgebende Filterelement (8) aus einem Gewebe gebildet ist.

3. Entwässerungsvorrichtung gemäß Anspruch 1 oder 2, **dadurch gekennzeichnet, dass** das zumindest eine die Schneckenwelle (7) zumindest abschnittsweise umgebende Filterelement (8) austauschbar ist.

4. Entwässerungsvorrichtung gemäß einem der vorhergehenden Ansprüche, **dadurch gekennzeichnet, dass** ein Durchmesser eines Schneckenwellenkerns (20) der Schneckenwelle (7) entlang einer Förderrichtung (9) der Schneckenwelle (7) zunimmt.

5. Entwässerungsvorrichtung gemäß einem der vorhergehenden Ansprüche, **dadurch gekennzeichnet, dass** eine Steigung einer Schneckenwendel (19) der Schneckenwelle (7) entlang der Förderrichtung (9) der Schneckenwelle (7) abnimmt.

6. Entwässerungsvorrichtung gemäß einem der vorhergehenden Ansprüche, **dadurch gekennzeichnet, dass** die zumindest eine Pressanordnung (2) ferner zumindest ein Stützelement (10) aufweist, welches die zumindest eine Schneckenwelle (7) und das die zumindest eine Schneckenwelle (7) zumindest abschnittsweise umgebende Filterelement (8) aufnimmt.

7. Entwässerungsvorrichtung gemäß einem der vorhergehenden Ansprüche, **dadurch gekennzeichnet, dass** die zumindest eine Pressanordnung (2) ferner zumindest eine Retentionseinrichtung (11) aufweist, welche dafür eingerichtet ist, den zumindest einen zweiten Auslass (4) wahlweise zu verschließen oder freizugeben.

8. Entwässerungsvorrichtung gemäß Anspruch 7, **dadurch gekennzeichnet, dass** die zumindest eine Retentionseinrichtung (11) eine Druckplatte ist, welche den zumindest einen zweiten Auslass (4) mittels eines einstellbaren Gegendrucks verschließt.

9. Entwässerungsvorrichtung gemäß Anspruch 9, **dadurch gekennzeichnet, dass** der Gegendruck der Druckplatte mittels zumindest einer Druckfeder (12) einstellbar ist.

10. Entwässerungsvorrichtung gemäß einem der vorhergehenden Ansprüche, ferner aufweisend zumindest einen Substratvorlagebehälter (16) und/oder zumindest einen Flockungsmittelvorlagebehälter (17), wobei der zumindest eine Substratvorlagebehälter (16) und/oder der zumindest eine Flockungsmittelvorlagebehälter (17) über zumindest jeweils eine Zuleitung oder zumindest eine gemeinsame Zuleitung fluidisch mit dem zumindest einen Einlass (1) verbunden ist/sind.

11. Entwässerungsvorrichtung gemäß Anspruch 10, **dadurch gekennzeichnet, dass** die zumindest eine gemeinsame Zuleitung zumindest ein Dosierventil für eine dosierte Zugabe zumindest eines Flockungsmittels aufweist.

12. Entwässerungsvorrichtung gemäß einem der vorhergehenden Ansprüche, ferner aufweisend zumindest einen Filtratbehälter (15), wobei der zumindest eine Filtratbehälter (15) fluidisch mit der zumindest einen Pressanordnung (2) verbunden ist.

13. Entwässerungsvorrichtung gemäß einem der vorhergehenden Ansprüche, ferner aufweisend eine Haltevorrichtung, welche dafür ausgebildet ist, die Entwässerungsvorrichtung in einem einstellbaren Neigungswinkel zu haltern.

14. Entwässerungsvorrichtung gemäß einem der vorhergehenden Ansprüche, ferner aufweisend eine Steuerungs- und/oder Regelungseinheit, die dazu ausgebildet ist, Komponenten der Entwässerungsvorrichtung zu steuern und/oder zu regeln.

15. Verfahren zum Entwässern von Substrat mittels einer Entwässerungsvorrichtung aufweisend folgende Verfahrensschritte:
a. Befüllen einer Pressanordnung (2) mit einem zu entwässernden Substrat,
b. Erzeugen eines Vakuums/Unterdrucks in der Pressanordnung (2) mittels einer Vakuumpumpe (5),
c. Austreiben einer in dem Substrat vorhandenen Flüssigkeit mittels des erzeugten Unterdrucks/Vakuums und der Pressanordnung (2), wobei die Pressanordnung (2) mittels einer Schneckenwelle (7), welche angetrieben wird, das Substrat entwässert und einen auf einem Filterelement (8) akkumulierendes entwässertes Substrat vorwärts bis zu einem Substratauslass der Entwässerungsvorrichtung befördert.

16. Verfahren gemäß Anspruch 16, **dadurch gekennzeichnet, dass** Verfahrensschritt a. durch Verfahrensschritt b. erfolgt, indem das zu entwässernde Substrat mittels des erzeugten Vakuums/Unterdrucks in die Pressanordnung (2) gesaugt wird.

17. Verfahren gemäß Anspruch 16 oder 17, **dadurch gekennzeichnet, dass** dem zu entwässerndem Substrat vor oder während des Befüllens der Pressanordnung (2) ein Flockungsmittel beigesetzt wird.

18. Verfahren gemäß einem der Ansprüche 16 bis 18, **dadurch gekennzeichnet, dass** das Austreiben der Flüssigkeit in Schritt c) mittels einem sich verjüngenden Schneckenwellenkerndurchmesser der Schneckenwelle (7) erfolgt.
